# EUROPÄISCHE PATENTSCHRIFT

(11) **EP 3 711 862 B1**
(45) Veröffentlichungstag und Bekanntmachung des Hinweises auf die Patenterteilung: **06.05.2026**
(21) Anmeldenummer: 20020122.6
(22) Anmeldetag: 16.03.2020
(51) Int. Cl.: B02C 18/30, A22C 17/00, A22C 21/00, B02C 18/36

(54) **SCHNEIDVORRICHTUNG; SEPARIERER; VERFAHREN ZUM SEPARIEREN VON LEBENSMITTELBESTANDTEILEN MITTELS EINES SEPARIERERS**
CUTTING DEVICE; SEPARATOR; METHOD FOR SEPARATING FOOD COMPONENTS USING A SEPARATOR
DISPOSITIF DE COUPE, SÉPARATEUR, PROCÉDÉ DE SÉPARATION DES INGRÉDIENTS ALIMENTAIRES AU MOYEN D'UN SÉPARATEUR

(30) Priorität: 18.03.2019 DE 102019106758
(43) Veröffentlichungstag der Anmeldung: 23.09.2020
(73) Patentinhaber: Maschinenfabrik Seydelmann KG, 70174 Stuttgart (DE)
(72) Erfinder: Seydelmann, Andreas, 70174 Stuttgart (DE); Leinmüller, Sven, 73563 Mögglingen (DE)
(74) Vertreter: Patentanwälte Schuster, Müller & Partner mbB

(56) Entgegenhaltungen:
- EP-A1- 0 750 943
- DE-A1- 102017 003 406
- DE-A1- 3 511 643
- US-A- 3 340 917
- US-A- 4 180 212

## Beschreibung

### Stand der Technik

Die Erfindung geht aus von eine Schneidvorrichtung, nach der Gattung des Anspruchs 1, einem Separierer, nach der Gattung des Anspruchs 13, und einem Verfahren zum Separieren von Lebensmittelbestandteilen mittels eines Separierers, nach der Gattung des Anspruchs 19.

Es gehört zum Stand der Technik, dass Fleischwölfe eingesetzt werden, um Lebensmittel, wie z.B. Fleisch, Fisch, Gemüse, Tofu und Käse, zu zerkleinern. So ist aus der Patentschrift DE 10 2011 008 389 B4 ein Wolf zum Zerkleinern von Lebensmitteln mit einer Ausleiteinrichtung zur Abfuhr von unerwünschten, festen Bestandteilen aus den Lebensmitteln bekannt, der zumindest ein Trennmesser, eine Lochscheibe und eine Stützeinrichtung zum Abstützen der Lochscheibe aufweist, wobei die Ausleiteinrichtung zumindest abschnittsweise an der Stützeinrichtung vorgesehen ist, einstückig mit dieser ausgebildet ist und innerhalb eines Steges der Stützeinrichtung angeordnet ist. Nachteilig ist hierbei, dass die Schneidmittel sehr verschleißanfällig sind, wodurch die Standzeit als eher begrenzt anzusehen ist.

Des Weiteren ist aus der Patentschrift DE 21 54 353 C2 eine Schneidemaschine für Fleischwaren oder dergleichen mit einem Schneidsatz bekannt, bestehend aus mindestens einem umlaufenden Messer mit mindestens einer Scherkante, der nahe ihrem inneren Ende ein Kanal zum Ableiten von Schneidgutteilen zugeordnet ist, der durch ein Mittelloch der dem Messer nachgeschalteten, als Gegenmesser wirkenden Lochscheibe führt, wobei der Ableitkanal in eine einen Sammelraum begrenzende Auffangkappe führt, wobei die weiter außen liegenden Teile der Scherkante in der Drehrichtung des Messers den weiter innen liegenden Teilen der Scherkannte voreilen und aus dem Sammelraum der Auffangkappe ein Ableitrohr herausgeführt ist, in das eine dessen Durchgangsquerschnitt verändernde, verstellbare Vorrichtung, z.B. ein Hahn, eingeschaltet ist. Auch bei dieser Lösung unterliegt der Schneidsatz einem hohen Verschleiß, so dass ebenfalls mit begrenzten Standzeiten zu rechnen ist.

Des Weiteren ist aus der Patentschrift DE 10 2017 003 407 B3 eine Vorrichtung zum Zerkleinern von Lebensmitteln bekannt, die ein Schneidmittel sowie ein Druckgehäuse mit einer zylindrischen Trommelwand aufweist, wobei das Druckgehäuse an einem ersten Endabschnitt mit einer Eintrittsöffnung für das Lebensmittel ausgebildet und in dem Druckgehäuse eine Förderschnecke drehbar gelagert ist, die mehrere durch mindestens einen Schneckengang voneinander getrennte Schneckenkammern aufweist, wobei die Förderschnecke seitens des Schneidmittels eine Schneckenwelle mit einem konstanten Durchmesser aufweist, dem sich ein zulaufender Abschnitt der Schneckenwelle in Richtung des ersten Endabschnitts bis auf den kleineren Durchmesser anschließt, wobei das Schneidmittel aus einem Trommelwandabschnitt, in dem mehrere Schneidöffnungen angeordnet sind, und einem die Schneidöffnungen überstreichenden Abschnitt des mindestens einen Schneckenganges gebildet ist. Vorteilhaft ist, dass durch die vorbekannte Vorrichtung zum Zerkleinern von Lebensmitteln bei gleichzeitiger Erhöhung von dessen Standzeit eine verbesserte Zufuhr des zu zerkleinernden Lebensmittels an das Schneidmittel erzielt wird. Nachteilig ist aber, dass der Austausch einer verschlissenen eine Schneckenwendel aufweisenden Förderschnecke, die mit zunehmenden Verschleiß zu einem immer unbefriedigenderen Ergebnis bei der Zerkleinerung des Lebensmittels führt, da sich ein zwischen der Trommel und der Schneckenwendel befindliches Spaltmaß vergrößert, hohe Kosten verursacht bzw. die Aufarbeitung einer verschlissenen Förderschnecke zeitintensiv ist. Dieser Nachteil ist auch bei der aus der Offenlegungsschrift DE 10 2017 003 406 A1 vorbekannten Vorrichtung zum Zerkleinern von Lebensmitteln, bei der durch die europäische Patentanmeldung EP 0 750 943 A1 und bei dem aus der Offenlegungsschrift DE 195 16 716 A1 vorbekannten Rohrwolf gegeben.

Des Weiteren ist aus der Patentschrift US 3,340,917 A eine Maschine zum Hochgeschwindigkeitszerkleinern von Fleisch oder ähnlichen Produkten bekannt, bestehend aus einem Gehäuse, in dem eine zylindrische, perforierte Schneidplatte montiert ist, die eine Produktaufnahmekammer und eine Produktabgabekammer trennt, einer hohlen, rotierenden Welle, die konzentrisch in der zylindrischen Schneidplatte montiert ist, Messerhaltern, die auf der Welle montiert sind und in denen Kolben gleitend angeordnet sind, wobei die Kolben Klingen halten, die z.B. durch Druckluft gegen die Innenfläche der Schneidplatte drücken, Nachteilig ist hierbei der hohe konstruktive Aufwand, durch den zudem bewirkt wird, dass die Maschine einen sehr hohen Reinigungsaufwand aufweist. Dieser Nachteil ist auch bei der aus der Offenlegungsschrift DE 35 11 643 A1 vorbekannten Fleischabtrennvorrichtung und bei der aus der Patentschrift US 4,180,212 A vorbekannten Vorrichtung mit einem Hochgeschwindigkeitsmesser gegeben.

Aufgabe der Erfindung ist es daher eine Schneidvorrichtung, einen Separierer und ein Verfahren zum Separieren von Lebensmittelbestandteilen mittels eines Separierers bereitzustellen, durch die die Nachteile des Standes der Technik überwunden werden.

### Die Erfindung und ihre Vorteile

Die erfindungsgemäße Schneidvorrichtung für zu separierendes Material, mit den Merkmalen des Anspruchs 1, der erfindungsgemäße Separierer, mit den Merkmalen des Anspruchs 13, und das erfindungsgemäße Verfahren zum Separieren von Lebensmittelbestandteilen mittels eines Separierers, mit den Merkmalen des Anspruchs 19, haben demgegenüber den Vorteil, dass die Auswirkungen, die ein zunehmender Verschleiß eines an einem Rotationskörper angeordneten Schneidwerkzeugs auf die Zerkleinerung eines Lebensmittels hat, dadurch kompensiert werden, dass das Schneidwerkzeug (Schneidmittel) bewegbar an dem Rotationskörper angeordnete ist, wobei der Rotationskörper mindestens einen Kanal für das zu separierende Material aufweist und der Kanal in eine Nut, in der ein Schneidwerkzeug bewegbar angeordnet ist, mündet oder ein bewegbar an dem Rotationskörper angeordnetes Schneidwerkzeug eine Stirnseite und eine mit einem Bolzen zusammenwirkende schiefe Ebene aufweist, durch die das Schneidwerkzeug bedingt durch einen Produktfluss eines zu separierenden Materials bewegbar ist, oder der Rotationskörper ein mit mindestens einem bewegbar angeordneten Schneidwerkzeug zusammenwirkendes Einstellelement, das drehbar ist, aufweist. Durch die Bewegbarkeit des Schneidwerkzeugs kann das für eine qualitativ hochwertige Zerkleinerung des Lebensmittels notwendige Spaltmaß zwischen einer Trommel und dem Schneidwerkzeug länger beibehalten werden, wodurch das Schneidwerkzeug trotz zunehmenden Verschleißes länger eingesetzt werden kann. Zudem verursacht der Austausch eines Schneidwerkzeugs nur geringe Kosten. Des Weiteren kann ein herkömmlicher Separierer auch durch eine erfindungsgemäße Schneidvorrichtung nachgerüstet werden.

Nach einer vorteilhaften Ausgestaltung der erfindungsgemäßen Schneidvorrichtung ist mindestens ein Schneidwerkzeug zumindest teilweise radial und/oder zumindest teilweise in Umfangrichtung bewegbar an dem Rotationskörper angeordnet.

Nach einer zusätzlichen vorteilhaften Ausgestaltung der erfindungsgemäßen Schneidvorrichtung weist der Rotationskörper ein erstes Ende und ein zweites Ende auf, wobei ein an dem ersten Ende vorhandener Durchmesser des Rotationskörpers gleich oder kleiner ist als ein an dem zweiten Ende vorhandener Durchmesser des Rotationskörpers. Denkbar sind insbesondere auch folgende Ausgestaltungen des Rotationskörpers, durch die eine Änderung des Volumenstroms bewirkt werden kann:
- Rotationskörper, zylindrisch
- Rotationskörper am ersten Ende im Durchmesser kleiner
- Rotationskörper als Schnecke und zylindrisch
- Rotationskörper als Schnecke und am ersten Ende im Durchmesser kleiner
- Rotationskörper als Schnecke und zylindrisch, der Schneckenkern im Durchmesser am ersten Ende im Durchmesser zylindrisch
- Rotationskörper als Schnecke und zylindrisch, der Schneckenkern im Durchmesser am ersten Ende im Durchmesser kleiner
- Rotationskörper als Schnecke und zylindrisch, die Schneckenwindelungen in der Steigung gleichbleibend / enger / weiter
- Rotationskörper am ersten Ende im Durchmesser kleiner, der Schneckenkern im Durchmesser am ersten Ende im Durchmesser zylindrisch
- Rotationskörper am ersten Ende im Durchmesser kleiner, der Schneckenkern im Durchmesser am ersten Ende im Durchmesser kleiner
- Rotationskörper am ersten Ende im Durchmesser kleiner, die Schneckenwindelungen in der Steigung gleichbleibend / enger / weiter.

In der erfindungsgemäßen Schneidvorrichtung ist mindestens ein bewegbar an dem Rotationskörper angeordnetes Schneidwerkzeug in einer an dem Rotationskörper angeordneten Nut angeordnet. Nach einer diesbezüglichen vorteilhaften Ausgestaltung der erfindungsgemäßen Schneidvorrichtung weist die Nut über ihre Länge zumindest teilweise eine konstante Tiefe und/oder zumindest teilweise eine schiefe Ebene auf.

Nach einer zusätzlichen vorteilhaften Ausgestaltung der erfindungsgemäßen Schneidvorrichtung ist mindestens ein in einer an dem Rotationskörper angeordneten Nut angeordnetes Schneidwerkzeug in der Nut hin und her bewegbar angeordnet und/oder in der Nut auf und ab bewegbar.

Nach einer zusätzlichen vorteilhaften Ausgestaltung der erfindungsgemäßen Schneidvorrichtung ist mindestens ein bewegbar an dem Rotationskörper angeordnetes Schneidwerkzeug drehfest an dem Rotationskörper angeordnet.

Nach einer zusätzlichen vorteilhaften Ausgestaltung der erfindungsgemäßen Schneidvorrichtung ist mindestens ein Schneidwerkzeug lösbar an dem Rotationskörper angeordnet.

Nach einer zusätzlichen vorteilhaften Ausgestaltung der erfindungsgemäßen Schneidvorrichtung weist mindestens ein Schneidwerkzeug eine Längsachse auf, die parallel zu Längsachse des Rotationskörpers ausgerichtet ist, und/oder weist mindestens ein Schneidwerkzeug eine Längsachse auf, die winkelig zu Längsachse des Rotationskörpers ausgerichtet ist.

Nach einer zusätzlichen vorteilhaften Ausgestaltung der erfindungsgemäßen Schneidvorrichtung weist mindestens ein Schneidwerkzeug eine zumindest teilweise profilierte Oberfläche auf. Durch die zumindest teilweise profilierte Oberfläche des Schneidwerkzeugs wird eine durch ein Lebensmittel initiierte Bewegung des Schneidwerkzeugs unterstützt. Bevorzugt besteht die Profilierung aus Vertiefungen und/oder Erhebungen.

Nach einer zusätzlichen vorteilhaften Ausgestaltung der erfindungsgemäßen Schneidvorrichtung ist mindestens ein Schneidwerkzeug ein Schneidbalken.

Nach einer diesbezüglichen vorteilhaften Ausgestaltung der erfindungsgemäßen Schneidvorrichtung weist der Rotationskörper mindestens stellenweise mindestens eine Schneckenwendel auf.

Nach einer zusätzlichen vorteilhaften Ausgestaltung der erfindungsgemäßen Schneidvorrichtung weisen mindestens eine Schneckenwendel eine variierende Steigung und/oder mindestens zwei Schneckenwendel unterschiedliche Steigungen auf.

Nach einer vorteilhaften Ausgestaltung des erfindungsgemäßen Separierers, der eine Trommel, die eine Eintrittsöffnung zur Beschickung der Trommel mit einem zu separierenden Material, eine Austrittsöffnung für nicht oder schlecht schneidfähiges Material und zumindest teilweise Schneidöffnungen, durch die schneidfähige Bestandteile des Materials und/oder Fremdkörper aus der Trommel gelangen können, und eine innerhalb der Trommel angeordneten Schneidvorrichtung, die einen Rotationskörper, der eine Längsachse aufweist, um die er in mindestens eine Rotationsrichtung rotierbar ist, wobei an dem Rotationskörper mindestens ein Schneidwerkzeug angeordnet ist, aufweist, wobei mindestens ein Schneidwerkzeug bewegbar an dem Rotationskörper angeordnet ist, wobei der Rotationskörper mindestens einen Kanal für zu separierendes Material aufweist und der Kanal in eine Nut, in der ein Schneidwerkzeug bewegbar angeordnet ist, mündet oder ein bewegbar an dem Rotationskörper angeordnetes Schneidwerkzeug eine Stirnseite und eine mit einem Bolzen zusammenwirkende schiefe Ebene aufweist, durch die das Schneidwerkzeug bedingt durch einen Produktfluss eines zu separierenden Materials bewegbar ist, oder der Rotationskörper ein mit mindestens einem bewegbar angeordneten Schneidwerkzeug zusammenwirkendes Einstellelement, das drehbar ist, aufweist, ist die Austrittsöffnung der Trommel durch einen eine Verschlussposition aufweisenden Verschluss verschließbar.

Nach einer diesbezüglichen vorteilhaften Ausgestaltung des erfindungsgemäßen Separierers ist der Verschluss druckbelastet und/oder eine Verschlussklappe, wodurch ein Druckaufbau eines zu separierenden Materials innerhalb der Trommel und insbesondere im Bereich des Schneidwerkzeuges gesteuert werden kann.

Nach einer zusätzlichen vorteilhaften Ausgestaltung des erfindungsgemäßen Separierers weist der Verschluss mindestens ein Federelement auf. Bevorzugt ist das Federelement ein Druckzylinders, der über eine Koppelstange solange in einer die Austrittsöffnung verschließenden Position gehalten wird, bis der von dem Rotationskörper auf nicht oder schlecht schneidfähiges Material und/oder Fremdstoffe übertragene Druck derart anwächst, dass der Verschluss bzw. die Verschlussklappe von dem nicht oder schlecht schneidfähigen Material und/oder den Fremdstoffen gegen eine vom Druckzylinder aufgebrachte Verschlusskraft aufgestoßen wird und das nicht oder schlecht schneidfähige Material und/oder die Fremdstoffe aus der Austrittsöffnung herausfallen. Nach einem Ausstoß von nicht oder schlecht schneidfähigen Material und/oder Fremdstoffen durch die Austrittsöffnung reduziert sich der Innendruck innerhalb des Trommelinnenraums zunächst und die vom Druckzylinder aufgebrachte Verschlusskraft ist vorübergehend größer als der in dem Trommelinnenraum vorherrschende Druck des nicht oder schlecht schneidfähigen Materials und/oder der Fremdstoffe, wodurch sich der Verschluss und/oder die Verschlussklappe wieder in eine die Austrittsöffnung verschließende Position bewegt.

Nach einer zusätzlichen vorteilhaften Ausgestaltung des erfindungsgemäßen Separierers ist ein zwischen dem Schneidwerkzeug und der Trommel vorhandenes Spaltmaß durch die Bewegung des Schneidwerkzeuges variierbar.

Nach einer zusätzlichen vorteilhaften Ausgestaltung des erfindungsgemäßen Separierers ist die Schneidvorrichtung eine Schneidvorrichtung, gemäß einem der Ansprüche 1 bis 12.

Nach einer zusätzlichen vorteilhaften Ausgestaltung der erfindungsgemäßen Schneidvorrichtung weisen mindestens eine Schneckenwendel eine variierende Steigung aufweist und/oder mindestens zwei Schneckenwendel unterschiedliche Steigungen auf.

Nach einer vorteilhaften Ausgestaltung des erfindungsgemäßen Verfahrens zum Separieren von Lebensmittelbestandteilen mittels eines Separierers, wobei der Separierer eine Trommel, die eine Eintrittsöffnung zur Beschickung der Trommel mit dem zu separierenden Lebensmittel, eine Austrittsöffnung für nicht oder schlecht schneidfähige Bestandteile des Lebensmittels und/oder Fremdkörper (z.B. Kunststoffteile, Kabelbinder, Metallteile), die bevorzugt während des Separierens nicht geschnitten werden, und zumindest teilweise Schneidöffnungen, durch die schneidfähige Bestandteile des Lebensmittels aus der Trommel gelangen können, aufweist, und eine innerhalb der Trommel angeordnete Schneidvorrichtung, die einen Rotationskörper, der eine Längsachse aufweist, um die er in mindestens eine Rotationsrichtung rotierbar ist, wobei an dem Rotationskörper mindestens ein Schneidwerkzeug angeordnet ist, aufweist, wobei mindestens ein Schneidwerkzeug bewegbar an dem Rotationskörper angeordnet ist, wobei der Rotationskörper mindestens einen Kanal für zu separierendes Material aufweist und der Kanal in eine Nut, in der ein Schneidwerkzeug bewegbar angeordnet ist, mündet und durch die bewegbare Anordnung zumindest zeitweise eine Bewegung des Schneidwerkzeugs durch das in der Trommel befindliche Lebensmittel erfolgt oder ein bewegbar an dem Rotationskörper angeordnetes Schneidwerkzeug eine Stirnseite und eine mit einem Bolzen zusammenwirkende schiefe Ebene aufweist, durch die das Schneidwerkzeug bedingt durch einen Produktfluss eines zu separierenden Materials bewegbar ist, und durch die bewegbare Anordnung zumindest zeitweise eine Bewegung des Schneidwerkzeugs durch das in der Trommel befindliche Lebensmittel erfolgt oder der Rotationskörper ein mit mindestens einem bewegbar angeordneten Schneidwerkzeug zusammenwirkendes Einstellelement, das drehbar ist, aufweist, und durch die bewegbare Anordnung zumindest zeitweise eine Bewegung des Schneidwerkzeugs durch eine außerhalb der Trommel befindliche Bedienperson erfolgt.

Nach einer zusätzlichen vorteilhaften Ausgestaltung des erfindungsgemäßen Verfahrens ist die Bewegung des Schneidwerkzeugs zur Trommel hin gerichtet.

Nach einer zusätzlichen vorteilhaften Ausgestaltung des erfindungsgemäßen Verfahrens wird durch die Bewegung des Schneidwerkzeugs ein zwischen dem Schneidwerkzeug und der Trommel gegebenes Spaltmaß variiert.

Nach einer zusätzlichen vorteilhaften Ausgestaltung des erfindungsgemäßen Verfahrens baut sich durch die Rotationsrichtung des Rotationskörper vor einem Schneidwerkzeug, das bewegbar an dem Rotationskörper angeordnet ist, ein Druck auf, wodurch zumindest Teile des Lebensmittels unter das Schneidwerkzeug geleitet werden, so dass das Schneidwerkzeug in Richtung Trommel bewegt wird.

Nach einer zusätzlichen vorteilhaften Ausgestaltung des erfindungsgemäßen Verfahrens übt das Lebensmittel auf ein Schneidwerkzeug, das bewegbar an dem Rotationskörper angeordnet ist, einen Druck aus, wodurch das Schneidwerkzeug in Richtung Trommel bewegt wird.

Nach einer zusätzlichen vorteilhaften Ausgestaltung des erfindungsgemäßen Verfahrens wird durch die Bewegung des Schneidwerkzeugs das Schneidwerkzeug an die Trommel gedrückt.

Nach einer zusätzlichen vorteilhaften Ausgestaltung des erfindungsgemäßen Verfahrens wird als Schneidvorrichtung eine Schneidvorrichtung, gemäß einem der Ansprüche 1 bis 12, und/oder als Separierer ein Separierer, gemäß einem der Ansprüche 13 bis 18, eingesetzt.

Weitere Vorteile und vorteilhafte Ausgestaltung der Erfindung sind der nachfolgenden Beschreibung, der Zeichnung und den Ansprüchen entnehmbar.

### Zeichnung

Bevorzugte Ausführungsbeispiele des erfindungsgemäßen Gegenstands sind in der Zeichnung dargestellt und werden im Folgenden näher erläutert. Es zeigen
- Fig. 1: eine perspektivische Ansicht auf einen von einer Trommel umgebenen Rotationskörper,
- Fig. 2: eine Seitenansicht eines Rotationskörpers, gemäß Fig. 1,
- Fig. 3: eine stirnseitige Ansicht eines von einer Trommel umgebenen Rotationskörpers, gemäß Fig. 1,
- Fig. 4: eine Seitenansicht auf einen von einer Trommel umgebenen Rotationskörper, gemäß Fig. 1,
- Fig. 5: eine Seitenansicht eines Schneidwerkzeugs, gemäß Fig. 1,
- Fig. 6: eine perspektivische Ansicht auf einen von einer Trommel umgebenen Rotationskörper,
- Fig. 7: eine stirnseitige Ansicht eines von einer Trommel umgebenen Rotationskörpers, gemäß Fig. 6,
- Fig. 8: eine Schnittansicht des von einer Trommel umgebenen Rotationskörpers entlang der Linie A-A aus Fig. 7,
- Fig. 9: eine perspektivische Ansicht auf einen von einer Trommel umgebenen Rotationskörper,
- Fig. 10: eine stirnseitige Ansicht eines von einer Trommel umgebenen Rotationskörpers, gemäß Fig. 9, und
- Fig. 11: eine Schnittansicht des von einer Trommel umgebenen Rotationskörpers entlang der Linie A-A aus Fig. 10.

### Beschreibung des Ausführungsbeispiels

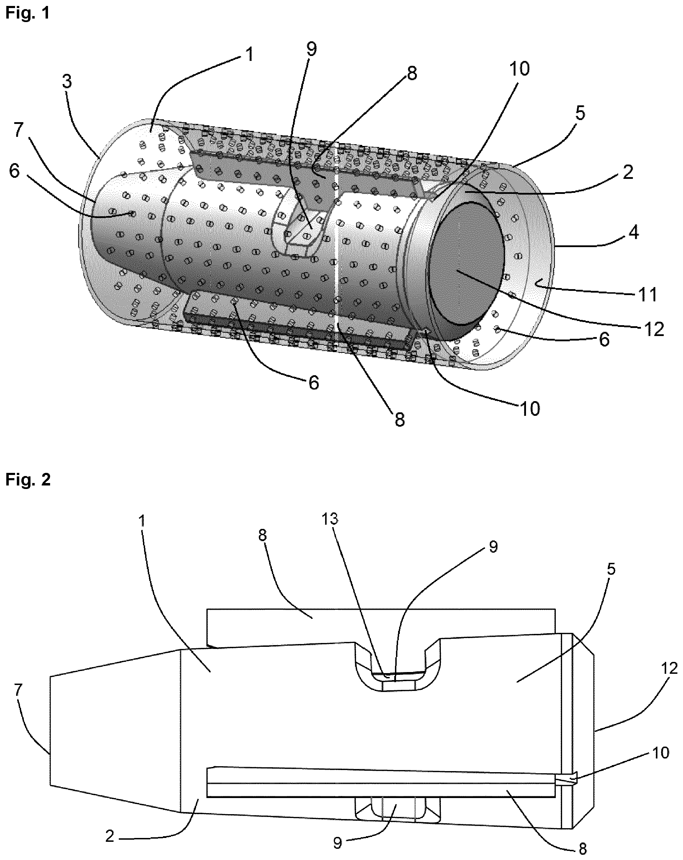

Fig. 1 zeigt eine perspektivische Ansicht auf einen von einer Trommel 1 (Lochtrommel) umgebenen Rotationskörper 2. Die Trommel 1 weist eine Eintrittsseite 3, an der eine nicht näher dargestellte Eintrittsöffnung zur Beschickung der Trommel 1 mit einem zu separierenden Material angeordnet ist, und eine Austrittsseite 4, an der eine nicht näher dargestellte Austrittsöffnung zur Ausleitung von in der Trommel 1 befindlichen nicht oder schlecht schneidfähigen Material angeordnet ist, auf. Die Trommel 1 weist eine Trommelwand 5 auf, die von Schneidöffnungen 6, durch die schneidfähiges Material aus der Trommel 1 abtransportiert werden kann, durchbrochen ist. Die Schneidöffnungen 6 können beispielsweise als zylindrische Bohrung ausgestaltet sein. Denkbar ist auch eine gestufte oder konische Bohrung, durch die eine geringere Reibung bewirkt wird, wobei die Bohrung zum Trommelinneren einen kleineren Durchmesser aufweist, als in Richtung der Außenseite. Der Rotationskörper 2 ist aus Richtung eines ersten Endes 7 gesehen um eine nicht dargestellte Längsachse im Uhrzeigersinn rotierbar. Bedingt durch die Rotationsrichtung baut sich vor einem Schneidwerkzeug 8, das z.B. als Schneidbalken ausgestaltet sein kann, ein Druck auf das zu separierende Material auf. Durch den Druck wird zu separierendes Material über Kanäle 9 an und/oder unter das Schneidwerkzeug 8, das in einer Nut 10 bewegbar angeordnet ist, geleitet. Da über dem Schneidwerkzeug 8, bedingt durch die Schneidöffnungen 6 in der Trommelwand 5, der Druck geringer ist, wandert der Schneidwerkzeug 8 nach außen in Richtung Innenseite 11 der Trommelwand 5. Da durch die bewegbare Anordnung des Schneidwerkzeugs 8 in der Nut 10 zumindest zeitweise eine Bewegung des Schneidwerkzeugs 8 durch das in der Trommel befindliche Lebensmittel möglich ist, wodurch das Schneidwerkzeug 8 gegen die Innenseite 11 der Trommelwand 5 gedrückt wird, kann eine qualitativ hochwertige Zerkleinerung des Lebensmittels gewährleistet werden. Somit wird ein unvermeidbarer Verschleiß eines an dem Rotationskörper 2 angeordneten Schneidwerkzeugs 8, der zu einer Vergrößerung des Spaltmaßes zwischen der Innenseite 11 der Trommelwand 5 und dem Schneidwerkzeugs 8 führen würde, durch das bewegbar an dem Rotationskörper 2 angeordnete Schneidwerkzeug 8 kompensiert. Bevorzugt ist das Schneidwerkzeug 8 lösbar an dem Rotationskörper 2 angeordnet, so dass es, falls der Verschleiß derart groß ist, dass es getauscht werden muss, leicht ausgewechselt werden kann. Somit ist es nicht erforderlich, den gesamten Rotationskörper 2 auszutauschen. Der Rotationskörper 2 weist einen Durchmesser auf, der bevorzugt an seinem ersten Ende 7 gleich oder kleiner ist als ein an einem zweiten Ende 12 des Rotationskörpers 2 vorhandener Durchmesser, wodurch der Druck auf das zu separierenden Material zum zweiten Ende 12 hin zunimmt.

Fig. 2 zeigt eine Seitenansicht eines Rotationskörpers 2, gemäß Fig. 1. Eine Druckeintrittsöffnung 13 ermöglicht es dem zu separierende Material unterhalb des Schneidwerkzeugs 8 zu gelangen, wodurch das Schneidwerkzeug 8 in Richtung Trommelwand bewegt wird.

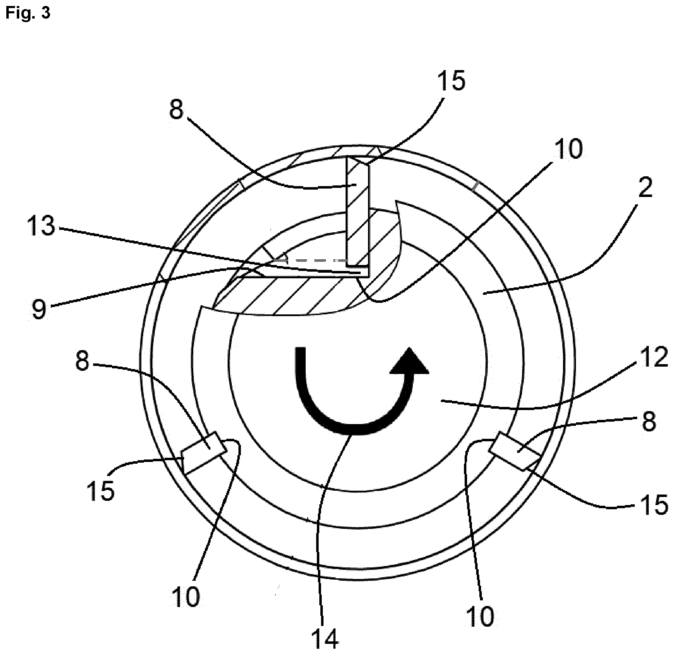

Fig. 3 zeigt eine stirnseitige Ansicht eines Rotationskörpers 2, gemäß Fig. 1, der um eine Rotationsrichtung 14 rotierbar ist. Durch das aufgrund der Rotation in den Kanal eindringende zu separierende Material wird das Schneidwerkzeug 8 mit seiner Schneidkante 15 gegen die Innenseite 11 der Trommel 1 gedrückt.

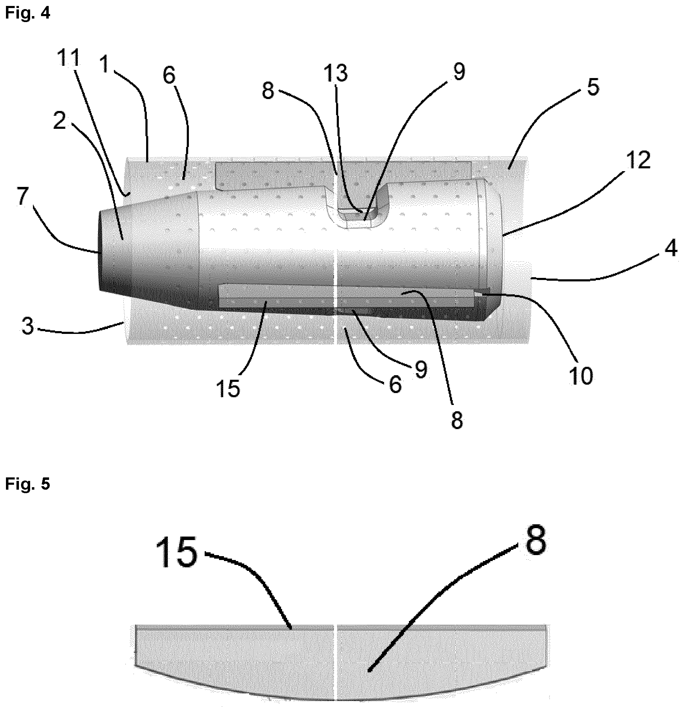

Fig. 4 zeigt eine Seitenansicht auf einen von einer Trommel 1 umgebenen Rotationskörper 2, gemäß Fig. 1. Zur Beschickung der Trommel 1 mit einem zu separierenden Material kann lösbar oder fest verbunden an dem ersten Ende 7 des Rotationskörpers 2 eine nicht dargestellte Förderschnecke angeordnet sein.

Fig. 5 zeigt eine Seitenansicht eines Schneidwerkzeugs 8, gemäß Fig. 1. Das Schneidwerkzeug 8 kann als Mondklinge (einsetzbare Klinge) ausgestaltet sein.

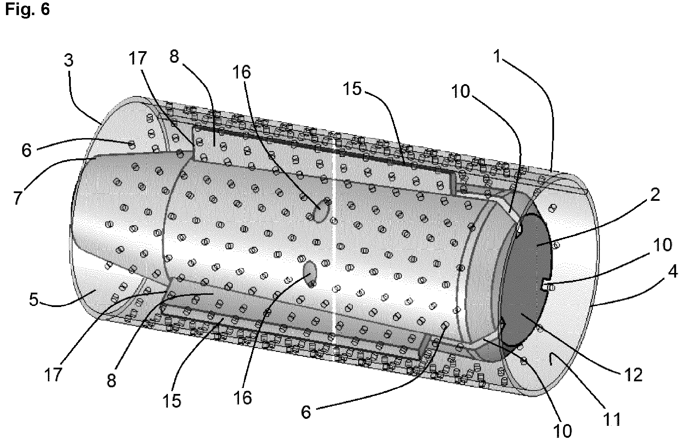

Fig. 6 zeigt eine perspektivische Ansicht auf einen von einer Trommel 1 umgebenen Rotationskörper 2. Im Gegensatz zu dem in den Fig. 1 bis Fig. 5 gezeigtem Ausführungsbeispiel, das ein dynamisches, mittels Druckunterschied bewegbares Schneidwerkzeug (Schneidbalken) zeigt, handelt es sich in diesem Ausführungsbeispiel um ein dynamisches, mittels schiefer Ebene bewegbares Schneidwerkzeug 8 (Schneidbalken). Das an dem Rotationskörper 2 angeordnete Schneidwerkzeug 8 wird, bedingt durch den Produktfluss des zu separierenden Materials, das insbesondere auf eine Stirnseite 17 des Schneidwerkzeugs 8 auftrifft, nach rechts gedrückt. Durch eine schiefe Ebene wird das Schneidwerkzeug 8 gegen die Innenseite 11 der Trommel 1 gedrückt. Der Anpressdruck kann durch den Winkel der schiefen Ebene beeinflusst werden. Bevorzugt werden zur Unterstützung der schiefen Ebene in Öffnungen 16 Bolzen eingeführt.

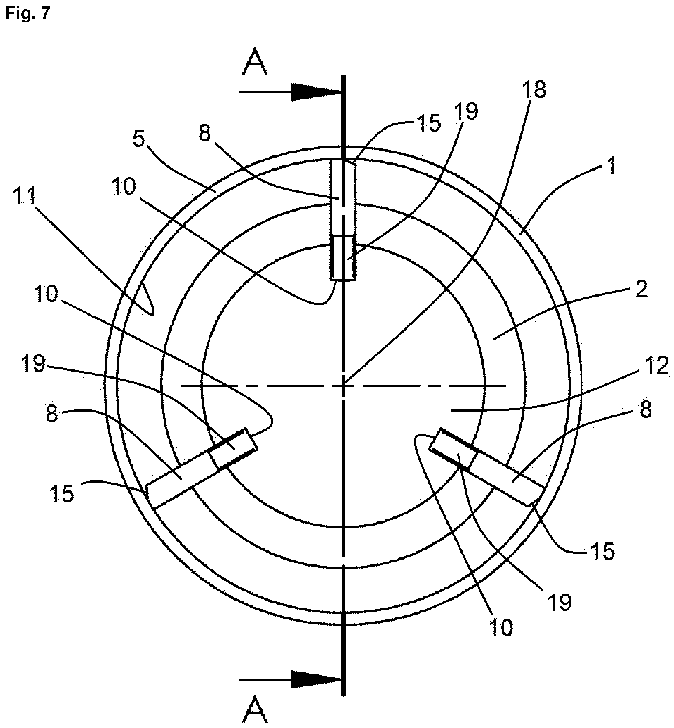

Fig. 7 zeigt eine stirnseitige Ansicht eines von einer Trommel 1 umgebenen Rotationskörpers 2, gemäß Fig. 6. Der Rotationskörper 2 ist um eine Längsachse 18 rotierbar. Die Nut 10 ist als schiefe Ebene 19 ausgestaltet.

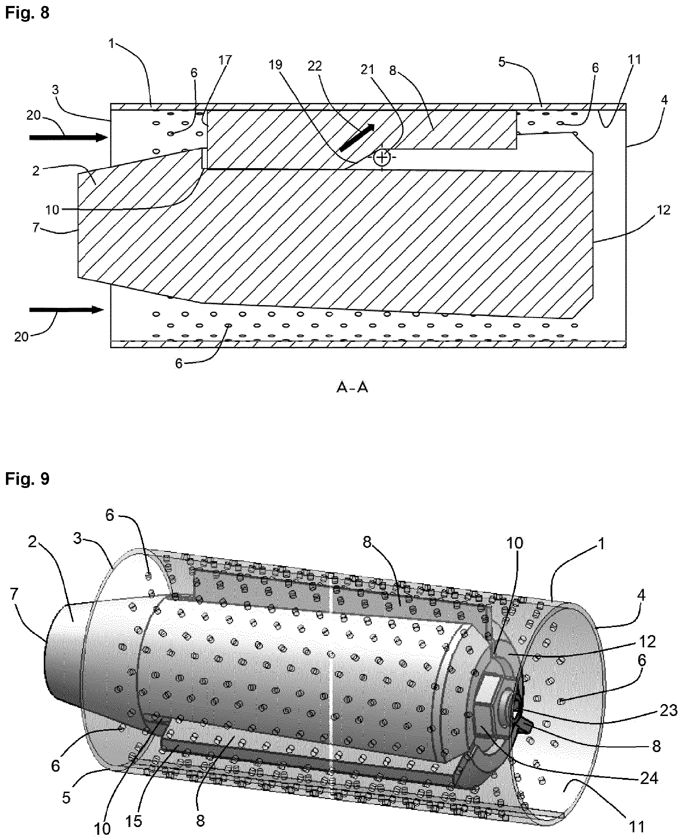

Fig. 8 zeigt eine Schnittansicht des von einer Trommel 1 umgebenen Rotationskörpers 2 entlang der Linie A-A aus Fig. 7. Das an dem Rotationskörper 2 angeordnete Schneidwerkzeug 8 wird, bedingt durch den Produktfluss 20 des zu separierenden Materials, das insbesondere auf eine Stirnseite 17 des Schneidwerkzeugs 8 auftrifft, nach rechts gedrückt. Durch die schiefe Ebene 19, die durch einen Bolzen 21 unterstützt wird, wird das Schneidwerkzeug 8 in Pfeilrichtung 22 gegen die Innenseite 11 der Trommel 1 gedrückt.

Fig. 9 zeigt eine perspektivische Ansicht auf einen von einer Trommel 1 umgebenen Rotationskörper 2. In diesem Ausführungsbeispiel handelt es sich um ein einstellbares Schneidwerkzeug 8 (Schneidbalken). Die Schneidwerkzeuge 8 können mit Hilfe eines durch eine Konter- oder Befestigungsschraube 23 gesichertes Einstellelement 24, das zwischen den Schneidwerkzeugen 8 und der Konter- oder Befestigungsschraube 23 bevorzugt als Mutter ausgestaltet ist, auf einer schiefen Ebene bewegt werden.

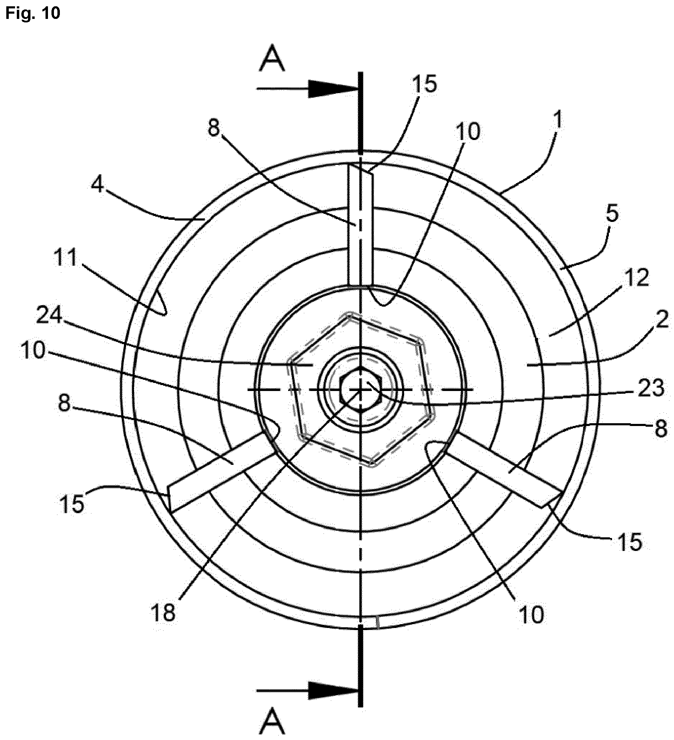

Fig. 10 zeigt eine stirnseitige Ansicht eines von einer Trommel 1 umgebenen Rotationskörpers 2, gemäß Fig. 9.

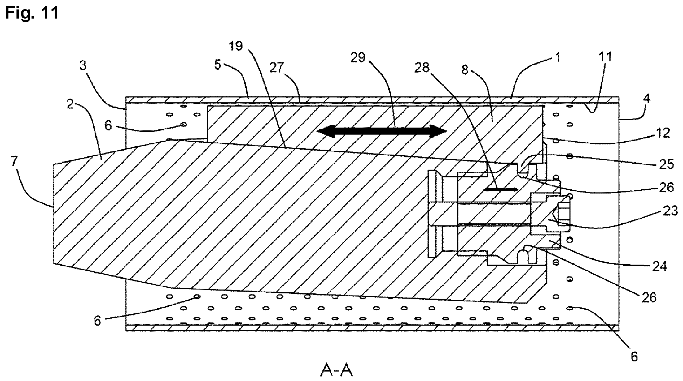

Fig. 11 zeigt eine Schnittansicht des von einer Trommel 1 umgebenen Rotationskörpers 2 entlang der Linie A-A aus Fig. 10. Durch eine formschlüssige Verbindung, die z.B. durch eine Nase 25 und einer an dem Einstellelement 24 angeordneten Nut 26 bewerkstelligt werden kann, wird ein Schneidwerkzeug 8 statisch an der durch eine nicht gezeigte Bedienperson gewünschten Position gehalten. Hierdurch kann das Spaltmaß 27 zwischen dem Schneidwerkzeug 8 und der Trommel 1 durch eine nicht gezeigte Bedienperson eingestellt werden. Im Gegensatz zu den bisher gezeigten Ausführungsbeispielen wird das Spaltmaß 27 also nicht durch den Produktfluss des zu separierenden Materials eingestellt, sondern durch die nicht gezeigte Bedienperson. Wie bei den anderen Ausführungsbeispielen wird ein unvermeidbarer Verschleiß eines an dem Rotationskörper 2 angeordneten Schneidwerkzeugs 8, der zu einer Vergrößerung des Spaltmaßes 27 zwischen der Innenseite 11 der Trommelwand 5 und dem Schneidwerkzeugs 8 führen würde, durch das bewegbar an dem Rotationskörper 2 angeordnete Schneidwerkzeug 8 kompensiert. Hierzu ist in diesem Ausführungsbeispiel zwischen den Schneidwerkzeugen 8 und der Konter- oder Befestigungsschraube 23 das das Einstellelement 24 angeordnet. Durch Verdrehen des Einstellelements 24 in die eine oder in die andere Richtung und die damit einhergehende Bewegung des des Einstellelements 24 in einer Bewegungsrichtung 28 können die Schneidwerkzeuge 8 gemeinsam in einer Bewegungsrichtung 29 hin- und her bewegt werden.

### Bezugszahlenliste

- 1: Trommel
- 2: Rotationskörper
- 3: Eintrittsseite
- 4: Austrittsseite
- 5: Trommelwand
- 6: Schneidöffnung
- 7: Erstes Ende
- 8: Schneidwerkzeug
- 9: Kanal
- 10: Nut
- 11: Innenseite
- 12: Zweites Ende
- 13: Druckeintrittsöffnung
- 14: Rotationsrichtung
- 15: Schneidkante
- 16: Öffnung
- 17: Stirnseite
- 18: Längsachse
- 19: Schiefe Ebene
- 20: Produktfluss
- 21: Bolzen
- 22: Pfeilrichtung
- 23: Konter- oder Befestigungsschraube
- 24: Einstellelement
- 25: Nase
- 26: Nut
- 27: Spaltmaß
- 28: Bewegungsrichtung
- 29: Bewegungsrichtung

## Patentansprüche

1. Schneidvorrichtung für zu separierendes Material,
- mit einem um eine Längsachse (18) in mindestens eine Rotationsrichtung (14) rotierbaren Rotationskörper (2) und
- mit mindestens einem an dem Rotationskörper (2) angeordneten Schneidwerkzeug (8),
wobei mindestens ein Schneidwerkzeug (8) bewegbar an dem Rotationskörper (2) angeordnet ist, wobei mindestens ein bewegbar an dem Rotationskörper (2) angeordnetes Schneidwerkzeug (8) in einer an dem Rotationskörper (2) angeordneten Nut (10) angeordnet ist, **dadurch gekennzeichnet, dass** der Rotationskörper (2) mindestens einen Kanal (9) für das zu separierende Material aufweist und der Kanal (9) in eine Nut (10), in der ein Schneidwerkzeug (8) bewegbar angeordnet ist, mündet
oder
ein bewegbar an dem Rotationskörper (2) angeordnetes Schneidwerkzeug (8) eine Stirnseite (17) und eine mit einem Bolzen (21) zusammenwirkende schiefe Ebene (19) aufweist, durch die das Schneidwerkzeug (8) bedingt durch einen Produktfluss (20) eines zu separierenden Materials bewegbar ist,
oder
der Rotationskörper (2) ein mit mindestens einem bewegbar angeordneten Schneidwerkzeug (8) zusammenwirkendes Einstellelement (24), das drehbar ist, aufweist.

2. Schneidvorrichtung, nach Anspruch 1,
**dadurch gekennzeichnet,**
**dass** mindestens ein Schneidwerkzeug (8) zumindest teilweise radial und/oder zumindest teilweise in Umfangrichtung bewegbar an dem Rotationskörper (2) angeordnet ist.

3. Schneidvorrichtung, nach Anspruch 1 oder Anspruch 2,
**dadurch gekennzeichnet,**
**dass** der Rotationskörper (2) ein erstes Ende (7) und ein zweites Ende (12) aufweist, wobei ein an dem ersten Ende (7) vorhandener Durchmesser des Rotationskörpers (2) gleich oder kleiner ist als ein an dem zweiten Ende (12) vorhandener Durchmesser des Rotationskörpers (2).

4. Schneidvorrichtung, nach einem der vorhergehenden Ansprüche,
**dadurch gekennzeichnet,**
**dass** die Nut (10) über ihre Länge zumindest teilweise eine konstante Tiefe und/oder zumindest teilweise eine schiefe Ebene (19) aufweist.

5. Schneidvorrichtung, nach einem der vorhergehenden Ansprüche,
**dadurch gekennzeichnet,**
**dass** mindestens ein in einer an dem Rotationskörper (2) angeordneten Nut (10) angeordnetes Schneidwerkzeug (8) in der Nut (10) hin und her bewegbar angeordnet ist und/oder in der Nut (10) auf und ab bewegbar ist.

6. Schneidvorrichtung, nach einem der vorhergehenden Ansprüche,
**dadurch gekennzeichnet,**
**dass** mindestens ein bewegbar an dem Rotationskörper (2) angeordnetes Schneidwerkzeug (8) drehfest an dem Rotationskörper (2) angeordnet ist.

7. Schneidvorrichtung, nach einem der vorhergehenden Ansprüche,
**dadurch gekennzeichnet,**
**dass** mindestens ein Schneidwerkzeug (8) lösbar an dem Rotationskörper (2) angeordnet ist.

8. Schneidvorrichtung, nach einem der vorhergehenden Ansprüche,
**dadurch gekennzeichnet,**
**dass** mindestens ein Schneidwerkzeug (8) eine Längsachse aufweist, die parallel zu Längsachse (18) des Rotationskörpers (2) ausgerichtet ist und/oder mindestens ein Schneidwerkzeug (8) eine Längsachse aufweist, die winkelig zu Längsachse (18) des Rotationskörpers (2) ausgerichtet ist.

9. Schneidvorrichtung, nach einem der vorhergehenden Ansprüche,
**dadurch gekennzeichnet,**
**dass** mindestens ein Schneidwerkzeug (8) eine zumindest teilweise profilierte Oberfläche aufweist.

10. Schneidvorrichtung, nach einem der vorhergehenden Ansprüche,
**dadurch gekennzeichnet,**
**dass** mindestens ein Schneidwerkzeug (8) ein Schneidbalken ist.

11. Schneidvorrichtung, nach einem der vorhergehenden Ansprüche,
**dadurch gekennzeichnet,**
**dass** der Rotationskörper (2) mindestens stellenweise mindestens eine Schneckenwendel aufweist.

12. Schneidvorrichtung, nach Anspruch 11,
**dadurch gekennzeichnet,**
**dass** mindestens eine Schneckenwendel eine variierende Steigung aufweist und/oder mindestens zwei Schneckenwendel unterschiedliche Steigungen aufweisen.

13. Separierer (4),
- mit einer Trommel (1), die eine Eintrittsöffnung zur Beschickung der Trommel mit einem zu separierenden Material, eine Austrittsöffnung für nicht oder schlecht schneidfähiges Material und/oder Fremdkörper und zumindest teilweise Schneidöffnungen (6), durch die schneidfähige Bestandteile des Materials aus der Trommel (1) gelangen können, aufweist, und
- mit einer innerhalb der Trommel (1) angeordneten Schneidvorrichtung, die einen Rotationskörper (2), der eine Längsachse (18) aufweist, um die er in mindestens eine Rotationsrichtung (14) rotierbar ist, wobei an dem Rotationskörper (2) mindestens ein Schneidwerkzeug (8) angeordnet ist, aufweist,
wobei mindestens ein Schneidwerkzeug (8) bewegbar an dem Rotationskörper (2) angeordnet ist, wobei mindestens ein bewegbar an dem Rotationskörper (2) angeordnetes Schneidwerkzeug (8) in einer an dem Rotationskörper (2) angeordneten Nut (10) angeordnet ist, **dadurch gekennzeichnet, dass** der Rotationskörper (2) mindestens einen Kanal (9) für zu separierendes Material aufweist und der Kanal (9) in eine Nut (10), in der ein Schneidwerkzeug (8) bewegbar angeordnet ist, mündet
oder
ein bewegbar an dem Rotationskörper (2) angeordnetes Schneidwerkzeug (8) eine Stirnseite (17) und eine mit einem Bolzen (21) zusammenwirkende schiefe Ebene (19) aufweist, durch die das Schneidwerkzeug (8) bedingt durch einen Produktfluss (20) eines zu separierenden Materials bewegbar ist,
oder
der Rotationskörper (2) ein mit mindestens einem bewegbar angeordneten Schneidwerkzeug (8) zusammenwirkendes Einstellelement (24), das drehbar ist, aufweist.

14. Separierer (4), nach Anspruch 13,
**dadurch gekennzeichnet,**
**dass** die Austrittsöffnung der Trommel (1) durch einen eine Verschlussposition aufweisenden Verschluss verschließbar ist.

15. Separierer (4), nach Anspruch 14,
**dadurch gekennzeichnet,**
**dass** der Verschluss druckbelastet ist und/oder eine Verschlussklappe ist.

16. Separierer (4), nach Anspruch 14 oder Anspruch 15,
**dadurch gekennzeichnet,**
**dass** der Verschluss mindestens ein Federelement aufweist.

17. Separierer (4), nach einem der Ansprüche 13 bis 16,
**dadurch gekennzeichnet,**
**dass** ein zwischen dem Schneidwerkzeug (8) und der Trommel (1) vorhandenes Spaltmaß (27) durch die Bewegung des Schneidwerkzeuges (8) variierbar ist.

18. Separierer (4), nach einem der Ansprüche 13 bis 17,
**dadurch gekennzeichnet,**
**dass** die Schneidvorrichtung eine Schneidvorrichtung, gemäß einem der Ansprüche 1 bis 12, ist.

19. Verfahren zum Separieren von Lebensmittelbestandteilen mittels eines Separierers (4), wobei der Separierer (4) eine Trommel (1), die eine Eintrittsöffnung zur Beschickung der Trommel (1) mit dem zu separierenden Lebensmittel, eine Austrittsöffnung für nicht oder schlecht schneidfähige Bestandteile des Lebensmittels und/oder Fremdkörper und zumindest teilweise Schneidöffnungen (6), durch die schneidfähige Bestandteile des Lebensmittels aus der Trommel (1) gelangen können, aufweist, und eine innerhalb der Trommel (1) angeordnete Schneidvorrichtung, die einen Rotationskörper (2), der eine Längsachse (18) aufweist, um die er in mindestens eine Rotationsrichtung (14) rotierbar ist, wobei an dem Rotationskörper (2) mindestens ein Schneidwerkzeug (8) angeordnet ist, aufweist,
wobei mindestens ein Schneidwerkzeug (8) bewegbar an dem Rotationskörper (2) angeordnet ist, wobei mindestens ein bewegbar an dem Rotationskörper (2) angeordnetes Schneidwerkzeug (8) in einer an dem Rotationskörper (2) angeordneten Nut (10) angeordnet ist, **dadurch gekennzeichnet, dass** der Rotationskörper (2) mindestens einen Kanal (9) für zu separierendes Material aufweist und der Kanal (9) in eine Nut (10), in der ein Schneidwerkzeug (8) bewegbar angeordnet ist, mündet und durch die bewegbare Anordnung zumindest zeitweise eine Bewegung des Schneidwerkzeugs (8) durch das in der Trommel (1) befindliche Lebensmittel erfolgt
oder
ein bewegbar an dem Rotationskörper (2) angeordnetes Schneidwerkzeug (8) eine Stirnseite (17) und eine mit einem Bolzen (21) zusammenwirkende schiefe Ebene (19) aufweist, durch die das Schneidwerkzeug (8) bedingt durch einen Produktfluss (20) eines zu separierenden Materials bewegbar ist, und durch die bewegbare Anordnung zumindest zeitweise eine Bewegung des Schneidwerkzeugs (8) durch das in der Trommel (1) befindliche Lebensmittel erfolgt
oder
der Rotationskörper (2) ein mit mindestens einem bewegbar angeordneten Schneidwerkzeug (8) zusammenwirkendes Einstellelement (24), das drehbar ist, aufweist, und durch die bewegbare Anordnung zumindest zeitweise eine Bewegung des Schneidwerkzeugs (8) durch eine außerhalb der Trommel (1) befindliche Bedienperson erfolgt.

20. Verfahren, nach Anspruch 19,
**dadurch gekennzeichnet,**
**dass** mindestens ein Schneidwerkzeug (8) vor und/oder während des Separierens bewegt wird.

21. Verfahren, nach Anspruch 19 oder Anspruch 20,
**dadurch gekennzeichnet,**
**dass** die Bewegung des Schneidwerkzeugs (3) zur Trommel (1) hin gerichtet ist.

22. Verfahren, nach einem der Ansprüche 19 bis 21,
**dadurch gekennzeichnet,**
**dass** durch die Bewegung des Schneidwerkzeugs (3) ein zwischen dem Schneidwerkzeug (8) und der Trommel (1) gegebenes Spaltmaß (27) variiert wird.

23. Verfahren, nach einem der Ansprüche 19 bis 22,
**dadurch gekennzeichnet,**
**dass** sich durch die Rotationsrichtung (14) des Rotationskörper (2) vor einem Schneidwerkzeug (8), das bewegbar an dem Rotationskörper (2) angeordnet ist, ein Druck aufbaut, wodurch zumindest Teile des Lebensmittels unter das Schneidwerkzeug (8) geleitet werden, so dass das Schneidwerkzeug (8) in Richtung Trommel (1) bewegt wird.

24. Verfahren, nach einem der Ansprüche 19 bis 23,
**dadurch gekennzeichnet,**
**dass** das Lebensmittel auf ein Schneidwerkzeug (8), das bewegbar an dem Rotationskörper (2) angeordnet ist, einen Druck ausübt, wodurch das Schneidwerkzeug (8) in Richtung Trommel (1) bewegt wird.

25. Verfahren, nach einem der Ansprüche 19 bis 24,
**dadurch gekennzeichnet,**
**dass** durch die Bewegung des Schneidwerkzeugs (8) das Schneidwerkzeug (8) an die Trommel (1) gedrückt wird.

26. Verfahren, nach einem der Ansprüche 19 bis 25,
**dadurch gekennzeichnet,**
**dass** als Schneidvorrichtung eine Schneidvorrichtung, gemäß einem der Ansprüche 1 bis 12, und/oder als Separierer (4) ein Separierer (4), gemäß einem der Ansprüche 13 bis 18, eingesetzt wird.

## Claims

1. A cutting device for material to be separated,
- including a rotational body (2) that is rotatable about a longitudinal axis (18) in at least one sense of rotation (14), and
- including at least one cutting tool (8) that is arranged on said rotational body (2),
said at least one cutting tool (8) being movably arranged on the rotational body (2), with at least one cutting tool (8) movably arranged on the rotational body (2) being arranged in a groove (10) disposed on said rotational body (2),
**characterised in that**
the rotational body (2) has at least one channel (9) provided for the material to be separated, and **in that** the channel (9) leads to a groove (10) in which a cutting tool (8) is movably arranged,
or
a cutting tool (8) that is movably arranged on the rotational body (2) has an end face (17) and an inclined plane (19) cooperating with a pin (21), which makes it possible for the cutting tool (8) to be moved under the action of a product flow (20) of material to be separated,
or
the rotational body (2) has an adjustment element (24) which cooperates with at least one movably arranged cutting tool (8).

2. The cutting device, as claimed in claim 1,
**characterised in that**
at least one cutting tool (8) is arranged on the rotational body (2) in such a manner as to be at least partially movable in a radial direction and/or at least partially movable in a circumferential direction.

3. The cutting device as claimed in claim 1 or claim 2,
**characterised in that**
the rotational body (2) has a first end (7) and a second end (12), with a diameter of the rotational body (2) present at the first end (7) being equal to, or smaller than a diameter of the rotational body (2) present at the second end (12).

4. The cutting device as claimed in any of the preceding claims, **characterised in that**
the groove (10), as considered over its length, has at least partially a constant depth and/or at least partially an inclined plane (19).

5. The cutting device as claimed in any of the preceding claims, **characterised in that**
at least one cutting tool (8) arranged in a groove (10) that is disposed on the rotational body (2) is arranged therein in such a manner as to be movable to and fro within said groove (10) and/or in such a manner as to be movable up and down within said groove (10).

6. The cutting device as claimed in any of the preceding claims, **characterised in that**
at least one cutting tool (8) that is movably arranged on the rotational body (2) is arranged on said rotational body (2) in a co-rotational manner.

7. The cutting device as claimed in any of the preceding claims, **characterised in that**
at least one cutting tool (8) is detachably arranged on the rotational body (2).

8. The cutting device as claimed in any of the preceding claims, **characterised in that**
at least one cutting tool (8) has a longitudinal axis which is oriented in parallel with the longitudinal axis (18) of the rotational body (2) and/or a least one cutting tool (8) has a longitudinal axis that is oriented at an angle with respect to the longitudinal axis (18) of the rotational body (2).

9. The cutting device as claimed in any of the preceding claims, **characterised in that**
at least one cutting tool (8) has an at least partially profiled surface.

10. The cutting device as claimed in any of the preceding claims, **characterised in that**
at least one cutting tool (8) is a cutting bar.

11. The cutting device as claimed in any of the preceding claims, **characterised in that**
the rotational body (2) is provided, at least in parts, with at least one worm spiral.

12. The cutting device, as claimed in claim 11,
**characterised in that**
at least one worm spiral has a varying pitch and/or at least two worm spirals have different pitches.

13. A separator (4),
- including a drum (1) that is provided with a feed-in opening for charging the drum with material to be separated, a discharge opening for discharging material that cannot, or cannot easily be cut and/or for foreign matter, and, at least partially, with cutting openings (6) through which cuttable constituents of the material may exit the drum (1), and
- including a cutting device that is arranged within the drum (1) and has a rotational body (2) having a longitudinal axis (18) about which it is rotatable in at least one sense of rotation (14), said rotational body (2) having at least one cutting tool (8) arranged thereon,
wherein at least one cutting tool (8) is movably arranged on the rotational body (2), with at least one cutting tool (8) movably arranged on the rotational body (2) being arranged within a groove (10) disposed on said rotational body (2),
**characterised in that**
the rotational body (2) has at least one channel (9) provided for material to be separated, and **in that** the channel (9) leads to a groove (10) in which a cutting tool (8) is movably arranged,
or
a cutting tool (8) that is movably arranged on the rotational body (2) has an end face (17) and an inclined plane (19) cooperating with a pin (21), which makes it possible for the cutting tool (8) to be moved under the action of a product flow (20) of material to be separated,
or
the rotational body (2) has an adjustment element (24) which cooperates with at least one movably arranged cutting tool (8).

14. The separator (4) as claimed in claim 13,
**characterised in that**
the discharge opening of the drum (1) is closeable by a closure having a closure position.

15. The separator (4) as claimed in claim 14,
**characterised in that**
the closure is exposed to pressure and/or is a closure flap.

16. The separator (4) as claimed in claim 14 or claim 15,
**characterised in that**
the closure has at least one spring element.

17. The separator (4) as claimed in any one of claims 13 to 16, **characterised in that**
a gap dimension (27) present between the cutting tool (8) and the drum (1) may be varied by moving the cutting tool (8).

18. The separator (4) as claimed in any one of claims 13 to 17, **characterised in that**
the cutting device is a cutting device as claimed in any one of claims 1 to 12.

19. A method of separating food constituents by means of a separator (4), wherein the separator (4) includes a drum (1) that is provided with a feed-in opening for charging the drum (1) with the material to be separated, a discharge opening for discharging constituents of the food product that cannot, or cannot easily be cut and/or for foreign matter, and, at least partially, with cutting openings (6) through which cuttable constituents of the food product may exit the drum (1), and wherein said separator further includes a cutting device that is arranged within the drum (1) and has a rotational body (2) having a longitudinal axis (18) about which it is rotatable in at least one sense of rotation (14), said rotational body (2) having at least one cutting tool (8) arranged thereon,
**characterised in that**
at least one cutting tool (8) is movably arranged on the rotational body (2), with at least one cutting tool (8) movably arranged on the rotational body (2) being arranged in a groove (10) disposed on said rotational body (2),
**characterised in that**
the rotational body (2) has at least one channel (9) provided for material to be separated, and **in that** the channel (9) leads to a groove (10) in which a cutting tool (8) is movably arranged, and **in that** due to the movable arrangement, a movement of the cutting tool (8) will be caused, at least from time to time, by the food product present in the drum (1)
or
a cutting tool (8) that is movably arranged on the rotational body (2) has an end face (17) and an inclined plane (19) cooperating with a pin (21), which makes it possible for the cutting tool (8) to be moved under the action of a product flow (20) of material to be separated, and **in that** due to said movable arrangement, a movement of the cutting tool (8) will be caused, at least from time to time, by the food product present in the drum (1)
or
the rotational body (2) has an adjustment element (24) which cooperates with at least one movably arranged cutting tool (8) that is rotatable, and **in that** due to the movable arrangement, a movement of the cutting tool (8) is caused, at least from time to time, by an operator present outside of the drum (1).

20. The method as claimed in claim 19,
**characterised in that**
at least one cutting tool (8) is being moved prior to, and/or during the separation process.

21. The method as claimed in claim 19 or claim 20,
**characterised in that**
the movement of the cutting tool (3) is directed towards the drum (1).

22. The method as claimed in any one of claims 19 to 21,
**characterised in that**
the movement of the cutting tool (3) causes a gap dimension (27) present between the cutting tool (8) and the drum (1) to be varied.

23. The method as claimed in any one of claims 19 to 22,
**characterised in that**
due to the sense of rotation (14) of the rotational body (2), pressure is built up in front of a cutting tool (8) that is movably arranged on the rotational body (2), whereby at least portions of the food product are guided under said cutting tool (8) such that the cutting tool (8) is moved in the direction of the drum (1).

24. The method as claimed in any one of claims 19 to 23,
**characterised in that**
the food product exerts pressure on the cutting tool (8) that is movably arranged on the rotational body (2), whereby the cutting tool (8) is moved in the direction of the drum (1).

25. The method as claimed in any one of claims 19 to 24,
**characterised in that**
the movement of the cutting tool (8) causes said cutting tool (8)) to be pressed against the drum (1).

26. The method as claimed in any one of claims 19 to 25,
**characterised in that**
the cutting device employed is a cutting device as claimed in any one of claims 1 to 12 and/or the separator (4) employed is a separator (4) as claimed in any one of claims 13 to 18.

## Revendications

1. Dispositif de coupe destiné à découper une matière à séparer,
- pourvu d'un corps rotatif (2) qui tourne autour d'un axe longitudinal (18) dans au moins un sens de rotation (14) et
- pourvu d'au moins un outil de coupe (8) disposé sur le corps rotatif (2),
ledit au moins un outil de coupe (8) étant disposé de manière mobile sur le corps rotatif (2), au moins un outil de coupe (8) disposé de manière mobile sur le corps rotatif (2) étant disposé dans une rainure (10) ménagée sur ledit corps rotatif (2),
**caractérisé en ce que**
le corps rotatif (2) présente au moins un canal (9) destiné à recevoir la matière à séparer et **en ce que** le canal (9) débouche dans une rainure (10) dans laquelle est disposé un outil de coupe (8),
ou
un outil de coupe (8) disposé de manière mobile sur le corps rotatif (2) présente une face frontale (17) et un plan incliné (19) qui coopère avec un boulon (21) et grâce auquel l'outil de coupe (8) peut être déplacé sous l'effet d'un flux de produit (20) constitué d'une matière à séparer,
ou
le corps rotatif (2) présente un élément de réglage (24) rotatif coopérant avec au moins un outil de coupe (8) disposé de manière mobile.

2. Dispositif de coupe selon la revendication 1,
**caractérisé en ce que**
au moins un outil de coupe (8) est disposé sur le corps rotatif (2) de manière mobile au moins en partie en sens radial et/ou au moins en partie en sens circonférentiel.

3. Dispositif de coupe selon la revendication 1 ou selon la revendication 2,
**caractérisé en ce que**
le corps rotatif (2) présente une première extrémité (7) et une deuxième extrémité (12), un diamètre du corps rotatif (2) situé au niveau de la première extrémité (7) étant égal ou inférieur à un diamètre du corps rotatif (2) situé au niveau de la deuxième extrémité (12).

4. Dispositif de coupe selon l'une quelconque des revendications précédentes,
**caractérisé en ce que**
la rainure (10) présente sur toute sa longueur au moins en partie une profondeur constante et/ou au moins en partie un plan incliné (19).

5. Dispositif de coupe selon l'une quelconque des revendications précédentes,
**caractérisé en ce que**
au moins un outil de coupe (8) disposé dans une rainure (10) ménagée dans le corps rotatif (2) est disposé dans ladite rainure (10) de manière à effectuer un mouvement de va-et-vient et/ou est disposé dans ladite rainure (10) de manière à effectuer un mouvement de montée et descente.

6. Dispositif de coupe selon l'une quelconque des revendications précédentes,
**caractérisé en ce que**
au moins un outil de coupe (8) disposé de manière mobile sur le corps rotatif (2) est monté solidaire en rotation sur ledit corps rotatif (2).

7. Dispositif de coupe selon l'une quelconque des revendications précédentes,
**caractérisé en ce que**
au moins un outil de coupe (8) est disposé de manière amovible sur le corps rotatif (2).

8. Dispositif de coupe selon l'une quelconque des revendications précédentes,
**caractérisé en ce que**
au moins un outil de coupe (8) présente un axe longitudinal qui est orienté parallèlement à l'axe longitudinal (18) du corps rotatif (2) et/ou au moins un outil de coupe (8) présente un axe longitudinal qui est orienté selon un angle donné par rapport à l'axe longitudinal (18) du corps rotatif (2).

9. Dispositif de coupe selon l'une quelconque des revendications précédentes,
**caractérisé en ce que**
au moins un outil de coupe (8) présente une surface au moins partiellement profilée.

10. Dispositif de coupe selon l'une quelconque des revendications précédentes,
**caractérisé en ce que**
au moins un outil de coupe (8) est une barre de coupe.

11. Dispositif de coupe selon l'une quelconque des revendications précédentes,
**caractérisé en ce que**
le corps rotatif (2) présente par endroits au moins une vis sans fin.

12. Dispositif de coupe selon la revendication 11,
**caractérisé en ce que**
au moins une vis sans fin présente un pas variable et/ou au moins deux vis sans fin présentent des pas différents.

13. Séparateur (4),
- pourvu d'un tambour (1) qui présente un orifice d'entrée permettant l'alimentation du tambour avec une matière à séparer, un orifice de sortie destiné à évacuer la matière difficile ou impossible à couper et/ou les corps étrangers, ainsi qu'au moins en partie des orifices de coupe (6) à travers lesquels les composants de la matière susceptibles d'être découpés peuvent être extraits du tambour (1), et
- pourvu d'un dispositif de coupe disposé à l'intérieur du tambour (1) et présentant un corps rotatif (2) avec un axe longitudinal (18) autour duquel il peut tourner au moins dans un sens de rotation (14), sur le corps rotatif (2) étant disposé au moins un outil de coupe (8),
au moins un outil de coupe (8) étant disposé de manière mobile sur le corps rotatif (2), au moins un outil de coupe (8) disposé de manière mobile sur le corps rotatif (2) étant disposé dans une rainure (10) ménagée sur ledit corps rotatif (2),
**caractérisé en ce que**
le corps rotatif (2) présente au moins un canal (9) destiné à recevoir la matière à séparer et **en ce que** le canal (9) débouche dans une rainure (10) dans laquelle un outil de coupe (8) est disposé de manière mobile,
ou
un outil de coupe (8) disposé de manière mobile sur le corps rotatif (2) présente une face frontale (17) et un plan incliné (19) qui coopère avec un boulon (21) et grâce auquel l'outil de coupe (8) peut être déplacé sous l'effet d'un flux de produit (20) constitué d'une matière à séparer,
ou
le corps rotatif (2) présente un élément de réglage (24) rotatif coopérant avec au moins un outil de coupe (8) disposé de manière mobile.

14. Séparateur (4) selon la revendication 13,
**caractérisé en ce que**
l'orifice de sortie du tambour (1) peut être fermé par un élément de fermeture présentant une position de fermeture.

15. Séparateur (4) selon la revendication 14,
**caractérisé en ce que**
l'élément de fermeture est soumis à une pression et/ou est un clapet de fermeture.

16. Séparateur (4) selon la revendication 14 ou selon la revendication 15, **caractérisé en ce que**
l'élément de fermeture présente au moins un élément élastique.

17. Séparateur (4) selon l'une quelconque des revendications 13 à 16, **caractérisé en ce que**
un interstice (27) prévu entre l'outil de coupe (8) et le tambour (1) peut varier en fonction du déplacement effectué par l'outil de coupe (8).

18. Séparateur (4) selon l'une quelconque des revendications 13 à 17, **caractérisé en ce que**
le dispositif de coupe est un dispositif de coupe selon l'une quelconque des revendications 1 à 12.

19. Procédé de séparation de composants alimentaires au moyen d'un séparateur (4), le séparateur (4) présentant un tambour (1) pourvu d'un orifice d'entrée permettant l'alimentation du tambour (1) avec la denrée alimentaire à séparer, d'un orifice de sortie permettant d'évacuer les composants de la denrée alimentaire difficiles ou impossibles à couper et/ou les corps étrangers, ainsi que, au moins en partie, d'orifices de coupe (6) à travers lesquels les composants de la denrée alimentaire susceptibles d'être coupés peuvent être extraits du tambour (1), et ledit séparateur présentant un dispositif de coupe disposé à l'intérieur dudit tambour (1) et équipé d'un corps rotatif (2) avec un axe longitudinal (18) autour duquel il peut tourner au moins dans un sens de rotation (14), sur le corps rotatif (2) étant disposé au moins un outil de coupe (8), **caractérisé en ce que**
au moins un outil de coupe (8) est disposé de manière mobile sur le corps rotatif (2), au moins un outil de coupe (8) disposé de manière mobile sur le corps rotatif (2) étant disposé dans une rainure (10) ménagée sur ledit corps rotatif (2),
**caractérisé en ce que**
le corps rotatif (2) présente au moins un canal (9) destiné à recevoir la matière à séparer, et **en ce que** le canal (9) débouche dans une rainure (10) dans laquelle un outil de coupe (8) est disposé de manière mobile et **en ce que**, grâce à sa disposition mobile, l'outil de coupe (8) effectue au moins par intermittence un déplacement à travers la denrée alimentaire qui se trouve dans le tambour (1),
ou
un outil de coupe (8) disposé de manière mobile sur le corps rotatif (2) présente une face frontale (17) et un plan incliné (19) qui coopère avec un boulon (21) et grâce auquel l'outil de coupe (8) peut être déplacé sous l'effet d'un flux de produit (20) constitué d'une matière à séparer et **en ce que**, grâce à sa disposition mobile, l'outil de coupe (8) effectue au moins par intermittence un déplacement à travers la denrée alimentaire qui se trouve dans le tambour (1),
ou
le corps rotatif (2) présente un élément de réglage (24) rotatif coopérant avec au moins un outil de coupe (8) disposé de manière mobile et **en ce que**, grâce à ladite disposition mobile, l'outil de coupe (8) peut être déplacé, au moins par intermittence, par un opérateur se trouvant à l'extérieur du tambour (1).

20. Procédé selon la revendication 19,
**caractérisé en ce que**
au moins un outil de coupe (8) est déplacé avant et/ou pendant le processus de séparation.

21. Procédé selon la revendication 19 ou selon la revendication 20, **caractérisé en ce que**
le déplacement de l'outil de coupe (3) s'effectue en direction du tambour (1).

22. Procédé selon l'une quelconque des revendications 19 à 21, **caractérisé en ce que**
le déplacement de l'outil de coupe (3) fait varier un interstice (27) prévu entre ledit outil de coupe (8) et le tambour (1).

23. Procédé selon l'une quelconque des revendications 19 à 22, **caractérisé en ce que**
le sens de rotation (14) du corps rotatif (2) devant un outil de coupe (8) disposé de manière mobile sur ledit corps rotatif (2) génère une pression qui fait passer au moins une partie de la denrée alimentaire sous l'outil de coupe (8), ce qui provoque le déplacement de l'outil de coupe (8) en direction du tambour (1).

24. Procédé selon l'une quelconque des revendications 19 à 23, **caractérisé en ce que**
la denrée alimentaire exerce une pression sur un outil de coupe (8) disposé de manière mobile sur le corps rotatif (2) ce qui provoque le déplacement de l'outil de coupe (8) en direction du tambour (1).

25. Procédé selon l'une quelconque des revendications 19 à 24, **caractérisé en ce que**
l'outil de coupe (8) est pressé contre le tambour (1) suite audit déplacement effectué par l'outil de coupe (8).

26. Procédé selon l'une quelconque des revendications 19 à 25, **caractérisé en ce que**
le dispositif de coupe utilisé est un dispositif de coupe selon l'une quelconque des revendications 1 à 12, et/ou le séparateur (4) utilisé et un séparateur (4) selon l'une quelconque des revendications 13 à 18.
